# EUROPEAN PATENT SPECIFICATION

(11) **EP 2 839 164 B1**
(45) Date of publication and mention of the grant of the patent: **28.08.2019**
(21) Application number: 13777938.5
(22) Date of filing: 17.04.2013
(51) Int. Cl.: F04D 29/12, F04D 29/10, F16J 15/34

(54) **PRESSURE COMPENSATING WET SEAL CHAMBER**
DRUCKKOMPENSIERTE NASSDICHTUNGSKAMMER
CHAMBRE ÉTANCHE À L'HUMIDITÉ À COMPENSATION DE PRESSION

(30) Priority: 17.04.2012 US 201213449171
(43) Date of publication of application: 25.02.2015
(73) Proprietor: Pentair Flow Technologies, LLC, Delavan, WI 53115 (US)
(72) Inventor: GOULET, Doug, Hanover, MN 55341 (US); HERMES, Jeff, Shoreview, MN 55126 (US)
(74) Representative: Barker Brettell LLP
(86) International application number: PCT/US2013/036919
(87) International publication number: WO 2013/158730

(56) References cited:
- EP-A2- 0 327 844
- EP-B1- 0 493 428
- WO-A1-2012/088328
- US-A- 4 289 445
- US-A- 5 827 042
- US-A1- 2003 198 554
- US-A1- 2007 140 876

## Description

### CROSS REFERENCE TO RELATED APPLICATIONS

### BACKGROUND

Centrifugal pumps typically include an impeller positioned in a pump chamber enclosed by a housing. The impeller is driven by a motor, which is mounted to the housing. A shaft connects the impeller and the motor. To seal a connection between the housing and the shaft, a seal is positioned on the shaft between the motor and the impeller.
WO2012/088328 discloses a pump including a pump chamber, a shaft at least partially positioned in the pump chamber, an impeller coupled to the shaft, and a seal coupled to the shaft. The pump also includes a wet seal chamber. The wet seal chamber can include a separator with a disc and a resilient member. The disc includes one or more slots through which fluid pressure from the pump chamber is transferred to the resilient member.
EP0327844 discloses an all-dry submersible motor pump with a concordant seal system. The pump has a motor within a motor room and a vertical rotary shaft driven by the motor and connected to a pump means. An air chamber is positioned between the motor room and the water pump means. An airtight disc is provided between the motor room and the air chamber with a central hole for passing the vertical rotary shaft. A concordant seal means is arranged below the disc and around the central hole and comprises a fluid-seal means and a pressure equalizing means.
US4289445 discloses a pump assembly wherein fluid under pressure in a pump housing is prevented from escaping around the drive shaft of the pump by a seal which is held in place by the combination of a spring and fluid pressure applied through a diaphragm from the interior of the pump housing.

The seal can be exposed to a fluid flowing through the pump chamber. Debris in the pumped fluid can reduce the lifespan of the seal. If the fluid is incompatible with the seal material, the seal may fail more rapidly. If the pump is running without pumping a fluid, the seal may overheat and fail.

### SUMMARY

The invention is defined by the appended claim 1.

### DESCRIPTION OF THE DRAWINGS

FIG. 1 is an isometric view of a pump according to one embodiment.
FIG. 2 is a cross-sectional view taken along lines 2-2 from FIG. 1, the motor not being shown.
FIG. 3 is a perspective view of a wet seal chamber used in the pump of FIG. 1 according to one embodiment.
FIG. 4 is an exploded view of the wet seal chamber of FIG. 3.
FIG. 5 is a perspective view of an alternate resilient member used in the wet seal chamber according to one embodiment of the invention.
FIG. 6 is a cross-sectional perspective view of the resilient member of FIG. 5.
FIG. 7 is a graph of different pressure distributions over flow rate taken at different locations in the pump of FIG. 1.
FIG. 8 is a cross-sectional view of a pump according to another embodiment of the invention.
FIG. 9 is a perspective view of the wet seal chamber of the pump of FIG. 8.
FIG. 10 is an exploded view of the wet seal chamber of FIG. 9.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from the scope of the invention which is defined by claim 1. The following detailed description is to be read with reference to the figures, in which like elements in different figures have like reference numerals. The figures, which are not necessarily to scale, depict selected embodiments and are not intended to limit the scope of the invention.

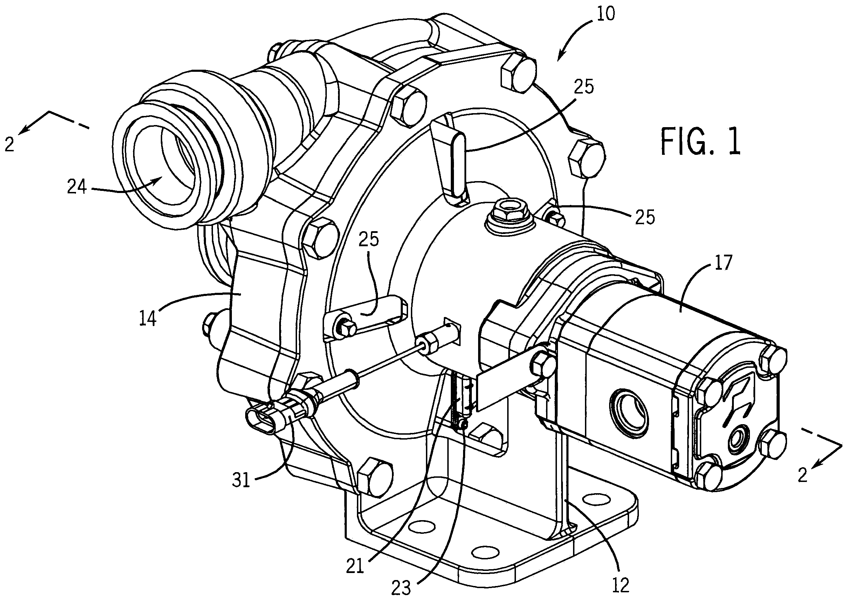

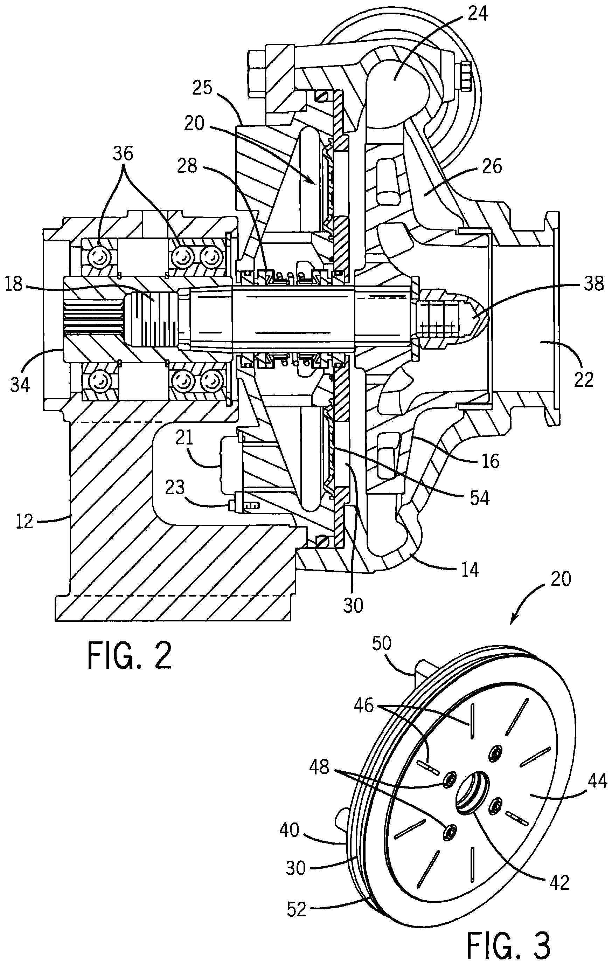

FIGS. 1 and 2 illustrate a pump 10 according to one embodiment. The pump 10 can include a first housing portion 12, a second housing portion 14, an impeller 16, a shaft 18, and a wet seal chamber 20. In some embodiments, the wet seal chamber 20 can be coupled to the first housing portion 12 while, in other embodiments, the first housing portion 12 can integrally form at least a portion of the wet seal chamber 20. The second housing portion 14 can include an inlet 22, an outlet 24, and a pump chamber 26. The pump chamber 26 can enclose the impeller 16. The wet seal chamber 20 can include a seal 28, which can be coupled to the shaft 18. The seal 28 can seal a connection between the shaft 18 and the wet seal chamber 20. The wet seal chamber 20 can include a first fluid, such as, for example, a lubricant. The seal 28 can prevent the first fluid from leaking into first housing portion 12 and/or the pump chamber 26. The level of the first fluid in the wet seal chamber 20 may be verified using a sight window 21 installed on the back of the first housing portion 12 by a fastener 23. Not only does the fastener 23 attach the sight window 21 to the first housing portion 12, but the fastener 23 can also act as a vent to the wet seal chamber 20 when filling the wet seal chamber 20 with the first fluid. The sight window 21 can be installed in alternative mounting locations 25 (three shown in FIG. 1) depending on the orientation of the pump 10 in its end-user environment.

As shown in FIGS. 2-4, a separator 30 can be positioned between the wet seal chamber 20 and the pump chamber 26. In some embodiments, the separator 30 can at least partially define the wet seal chamber 20 and the pump chamber 26. The separator 30 can be positioned adjacent to the impeller 16. In some embodiments, the separator 30 can be positioned substantially opposite the inlet 22. The separator 30 can be coupled to the first housing portion 12, the second housing portion 14, and/or the wet seal chamber 20. The second housing portion 14 can be removably coupled to the first housing portion 12. In some embodiments, the second housing portion 14 can be removed from the first housing portion 12 without detaching the impeller 16 and/or the separator 30.

As shown in FIG. 1, the impeller 16 can be driven by a motor 17. As also shown in FIG. 1, a speed sensor 31 can be used to collect data on the speed of the shaft 18 and other operating parameters of the motor 17. As shown in FIG. 2, the shaft 18 can be connected to a coupling 34 to connect the impeller 16 to the motor 17. The shaft 18 can be at least partially positioned in the pump chamber 26 and can extend through the separator 30 and the wet seal chamber 20. The shaft 18 and/or the coupling 34 can be rotatably coupled to the first housing portion 12 by bearings 36. The impeller 16 can be coupled to the shaft 18 by a contoured fastener 38. In some embodiments, the contoured fastener 38 can at least partly define a fluid flow path through the impeller 16.

FIG. 3 illustrates the wet seal chamber 20 according to one embodiment. The wet seal chamber 20 can include the separator 30, a back wall 40, and an opening 42. The separator 30 can include a disc 44, which can include one or more slots 46. Fasteners 48 can couple the disc 44 to the back wall 40. The back wall 40 can include a stud 50 to couple the wet seal chamber 20 to the first housing portion 12. A groove 52 can be formed between the separator 30 and the back wall 40. The groove 52 can receive a gasket (not shown) to seal a connection between the wet seal chamber 20 and the first housing portion 12 and/or the second housing portion 14.

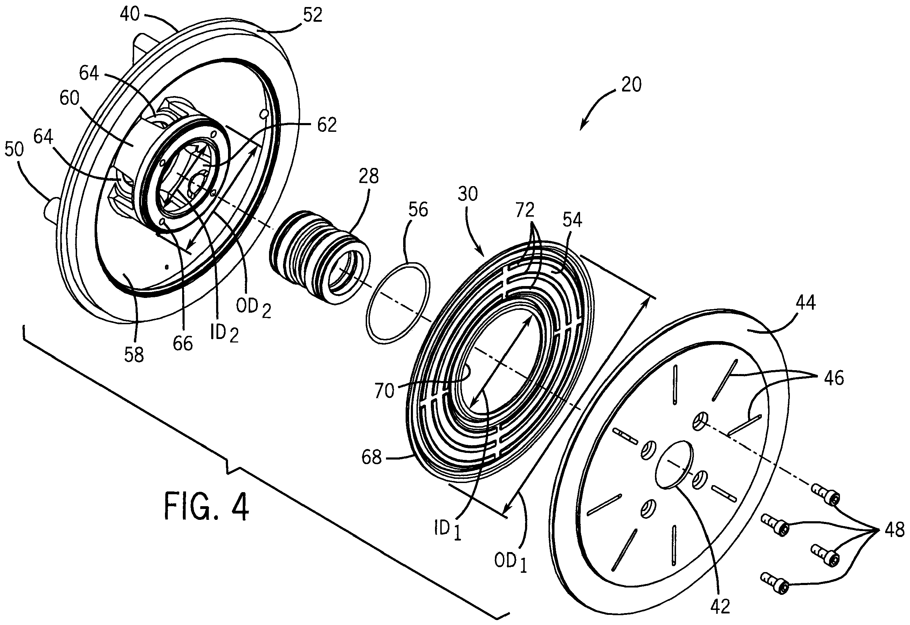

FIG. 4 illustrates the wet seal chamber 20 and its internal components according to one embodiment. In one embodiment, the wet seal chamber 20 can be configured as a drop-in replacement item for the pump 10. The wet seal chamber 20 can include a resilient member 54 and an O-ring 56. In some embodiments, the resilient member 54 can be a diaphragm. The resilient member 54 can guide one or more pistons or plungers (not shown). The resilient member 54 can include a first outer diameter OD₁ and a first inner diameter ID₁. The back wall 40 can include a reservoir 58 and a flange 60. In some embodiments, the back wall 40 can be inclined and/or curved to form the reservoir 58. The flange 60 can be positioned within the reservoir 58 and can enclose an inner volume 62, which can at least partly receive the seal 28. The flange 60 can include apertures 64, which can enable fluid communication between the reservoir 58 and the inner volume 62. The flange 62 can include a second outer diameter OD₂ and a second inner diameter ID₂. The first inner diameter ID₁ of the resilient member 54 can be in contact with the second outer diameter OD₂ of the flange 60. The first outer diameter OD₁ of the resilient member 54 can be in contact with the back wall 40. The O-ring 56 can be coupled to the second inner diameter ID₂ of the flange 62. In some embodiments, the flange 60 can include holes 66 to receive the fasteners 48 in order to couple the disc 44 to the back wall 40. The slots 46 in the disc 44 can enable fluid communication between the pump chamber 26 and a space between the resilient member 54 and the disc 44. In some embodiments, the slots 46 can transfer a pressure from the pump chamber 26 onto the resilient member 54.

In some embodiments, the resilient member 54 can include a first convolute 68 and a second convolute 70. The first convolute 68 can be positioned adjacent to the first outer diameter OD₁ and the second convolute 70 can be positioned adjacent to the first inner diameter ID₁. The first convolute 68 and/or the second convolute 70 can help the resilient member 54 to flex. If a pressure in the pump chamber 26 is higher than a pressure in the wet seal chamber 20, the first convolute 68 and/or the second convolute 70 can enable the resilient member 54 to bend toward the back wall 40. The resilient member 54 can decrease the volume of the reservoir 54 and can help direct the first fluid in the wet seal chamber 20 into the inner volume 62 of the flange 60. The resilient member 54 can form or include an impermeable membrane. As a result, the pressure in the vicinity of the seal 28 can be substantially higher than the pressure in the pump chamber 26 in the vicinity of the opening 42.

In some embodiments, the resilient member 54 can include one or more ribs 72. As shown in FIG. 4, the ribs 72 can be annular with respect to the resilient member 54; however, the ribs 72 can additionally or alternatively be formed radially with respect to the resilient member 54, or in other suitable configurations. The ribs 72 can be positioned between the first convolute 68 and the second convolute 70. In some embodiments, the ribs 72 can be substantially equally spaced along a perimeter of the resilient member 54. In some embodiments, the ribs 72 can prevent the resilient member 54 from blocking the slots 46, if the pressure in the wet seal chamber 20 is higher than in the pump chamber 26. As a result, the ribs 72 can help provide fluid communication of the pump chamber 26 with the space between the resilient member 54 and the disc 44.

Referring to FIG. 2, if the pump 10 is running, a second fluid can enter the pump chamber 26 through the inlet 22. The second fluid can be propelled toward the outlet 24 by the impeller 16. The pressure of the second fluid can increase while flowing from the inlet 22 to the outlet 24. In some embodiments, the pressure in the pump chamber 26 can increase in a radial direction away from the shaft 18. As a result, the pressure at an outer perimeter of the impeller 16 can be substantially higher than the pressure in the vicinity of the shaft 18. The pressure at the outer perimeter of the impeller 16 can also be substantially higher than the pressure in the wet seal chamber 20. To change the amount of force on the resilient member 24 based on the realized pressure differential between the fluid pressure in the pump chamber 26 and the pressure of the first fluid in the wet seal chamber 20, the size, design, and location of the slots 46 can be adjusted. Some of the second fluid can flow through the slots 46 and can deform the resilient member 24. The deformation of the resilient member 24 can increase the pressure in the wet seal chamber 20. As a result, the pressure in the vicinity of the shaft 18 and/or the seal 28 can be substantially higher in the wet seal chamber 20 than in the pump chamber 26. In some embodiments, the pressure in the wet seal chamber 20 can be substantially proportional to the pressure in the pump chamber 26. When the pump 10 is shut off and the pressure in the pump chamber 26 reduces, the resilient member 24 can decrease the pressure in the wet seal chamber 20 by deforming to increase the volume of the reservoir 54. Thus, one advantage of some embodiments of the pump 10 is that the pressure on the seal 28 in the wet seal chamber 20 can be both increased and decreased automatically based on the pressure of the second fluid in the pump chamber 26.

In some embodiments, the wet seal chamber 20 can prevent the second fluid from contacting the seal 28 and/or from penetrating into the wet seal chamber 20 through the opening 42. If the second fluid would be harmful to the seal 28 (e.g., the second fluid is an aggressive chemical), the wet seal chamber 20 can help increase the lifespan of the seal 28.

In some embodiments, the wet seal chamber 20 can be at substantially atmospheric pressure, if the pump 10 is not running. In other embodiments, the pressure in the wet seal chamber 20 can be slightly higher than atmospheric pressure, if the pump 10 is not running in order to help prevent fluid flow from the pump chamber 26 into the wet seal chamber 20, if the seal 28 fails. The wet seal chamber 20 will not be at a constant over-pressure, which is higher than the atmospheric pressure, which can assist in maintenance and can reduce accidents and/or injuries to a technician, if the pump 10 is being serviced and/or repaired.

If the pump 10 is running and no fluid is being pumped (dry-run condition), the first fluid in the wet seal chamber 20 can lubricate the shaft 18 and/or the seal 28. As a result, the set seal chamber 20 can increase the runtime of the pump 10 during dry-run conditions before the pump 10 fails due to overheating or other mechanical failures.

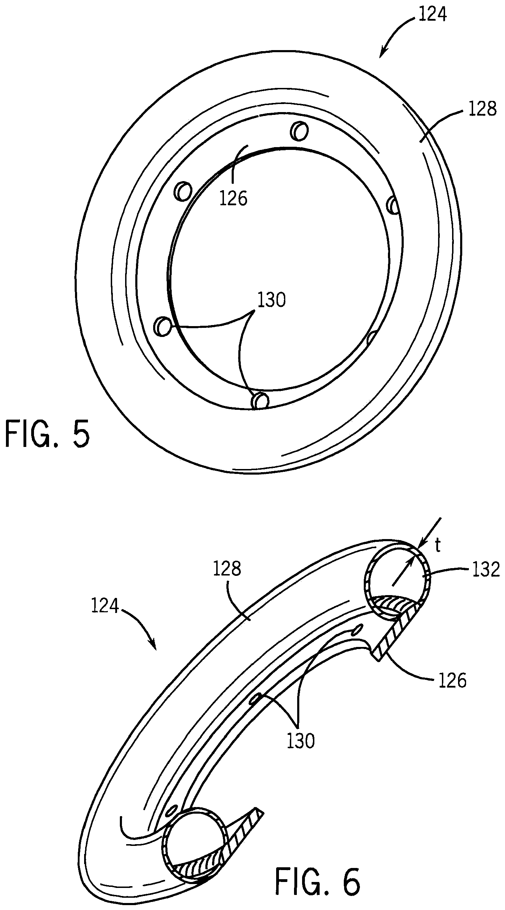

FIG. 5 illustrates a resilient member 124 according to an embodiment of the invention. The resilient member 124 can include a ring 126 and a bladder 128. The ring 126 can include holes 130, which can be used to couple the resilient member 124 to the back wall 40. The bladder 128 can deform under pressure in the pump chamber 26 and can extend into the reservoir 58 in order to decrease the volume of the reservoir 58 and/or increase pressure in the wet seal chamber 20.

FIG. 6 illustrates a cross section of the resilient member 124 according to one embodiment of the invention. In some embodiments, the bladder 128 can be molded onto the ring 126. The bladder 128 can enclose a chamber 132. In some embodiments, the ring 126 can at least partly define the chamber 132. The chamber 132 can include a third fluid. The material of the bladder 128, a thickness t of the bladder 128, and/or the third fluid can determine the flexibility of the bladder 128. As a result, the material of the bladder 128, the thickness t of the bladder 128, and/or the third fluid can help transfer the pressure from the pump chamber 26 into the wet seal chamber 20.

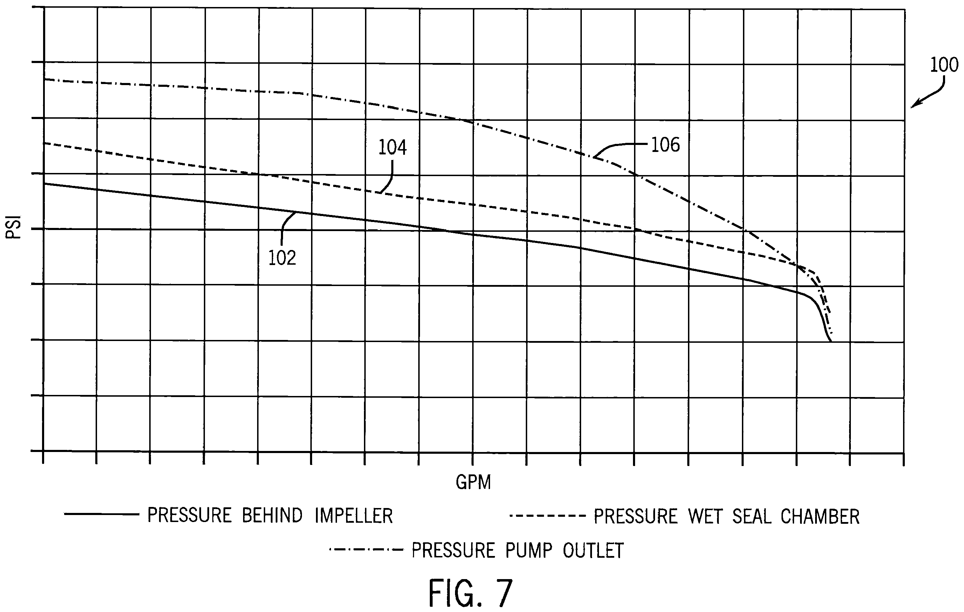

FIG. 7 illustrates a pressure graph 100 including a first pressure distribution 102, a second pressure distribution 104, and a third pressure distribution 106 of the pump 10 according to one embodiment of the invention. The first pressure distribution 102 depicts a pressure taken behind the impeller 16 in the vicinity of the shaft 18 over a flow rate of the pump 10. The second pressure distribution 104 depicts a pressure in the wet seal chamber 20 over a flow rate of the pump 10. In some embodiments, the second pressure distribution 104 can always be higher than the first pressure distribution 102. In other embodiments, the second pressure distribution 104 can be higher than the first pressure distribution 102 over a certain range of flow rate. The third pressure distribution 106 depicts a pressure at the outlet 24 over a flow rate of the pump 10, which can be substantially higher than the first pressure distribution 102 and/or the second pressure distribution 104.

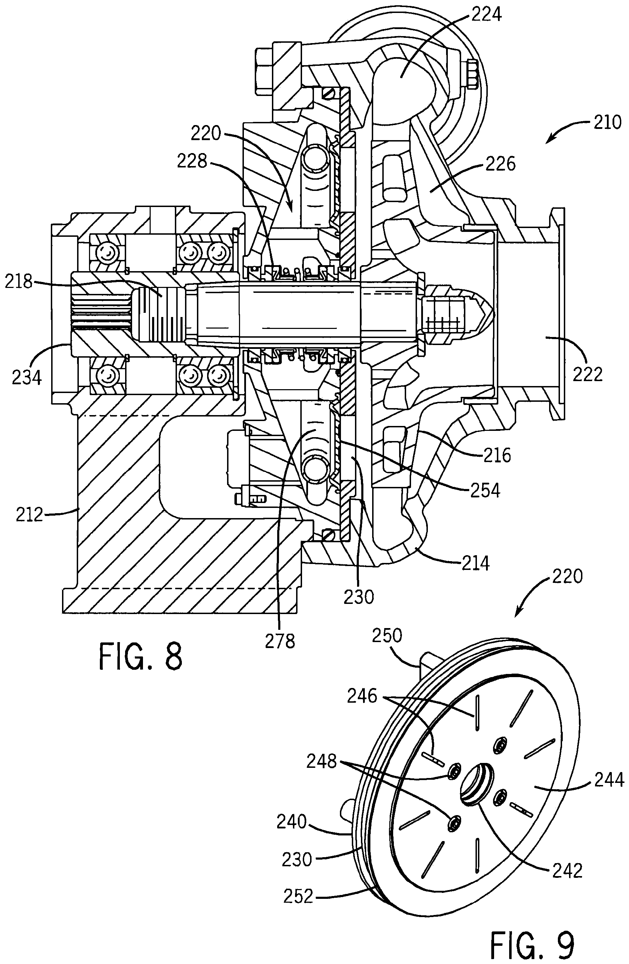

FIGS. 8-10 illustrate another embodiment of a pump 210 and wet seal chamber 220. The pump 210 as illustrated in FIG. 8 includes many of the same components as the pump 10 illustrated in FIGS. 1 and 2. The pump 210 can include a first housing portion 212, a second housing portion 214, an impeller 216, a shaft 218, and a wet seal chamber 220. The shaft 218 can be coupled to a motor (not shown) by a coupling 234. In some embodiments, the wet seal chamber 220 can be coupled to the first housing portion 212 while, in other embodiments, the first housing portion 212 can integrally form at least a portion of the wet seal chamber 220. The second housing portion 214 can include an inlet 222, an outlet 224, and a pump chamber 226. The pump chamber 226 can enclose the impeller 216. The wet seal chamber 220 can include a seal 228, which can be coupled to the shaft 218. The seal 228 can seal a connection between the shaft 218 and the wet seal chamber 220. The wet seal chamber 220 can include a first fluid, such as a lubricant. The seal 228 can prevent the first fluid from leaking into first housing portion 212 and/or the pump chamber 226.

As illustrated in FIGS. 8-10, a separator 230 can be positioned between the wet seal chamber 220 and the pump chamber 226. In some embodiments, the separator 230 can at least partially define the wet seal chamber 220 and the pump chamber 226. The separator 230 can be positioned adjacent to the impeller 216. In some embodiments, the separator 230 can be positioned substantially opposite the inlet 222. The separator 230 can be coupled to the first housing portion 212, the second housing portion 214, and/or the wet seal chamber 220. The second housing portion 214 can be removably coupled to the first housing portion 212. In some embodiments, the second housing portion 214 can be removed from the first housing portion 212 without detaching the impeller 216 and/or the separator 230.

As illustrated in FIG. 9, the wet seal chamber 220 can include the separator 230, a back wall 240, and an opening 242. The separator 230 can include a disc 244, which can include one or more slots 246. Fasteners 248 can couple the disc 244 to the back wall 240. The back wall 240 can include a stud 250 to couple the wet seal chamber 220 to the first housing portion 212. A groove 252 can be formed between the separator 230 and the back wall 240. The groove 252 can receive a gasket to seal a connection between the wet seal chamber 220 and the first housing portion 212 and/or the second housing portion 214.

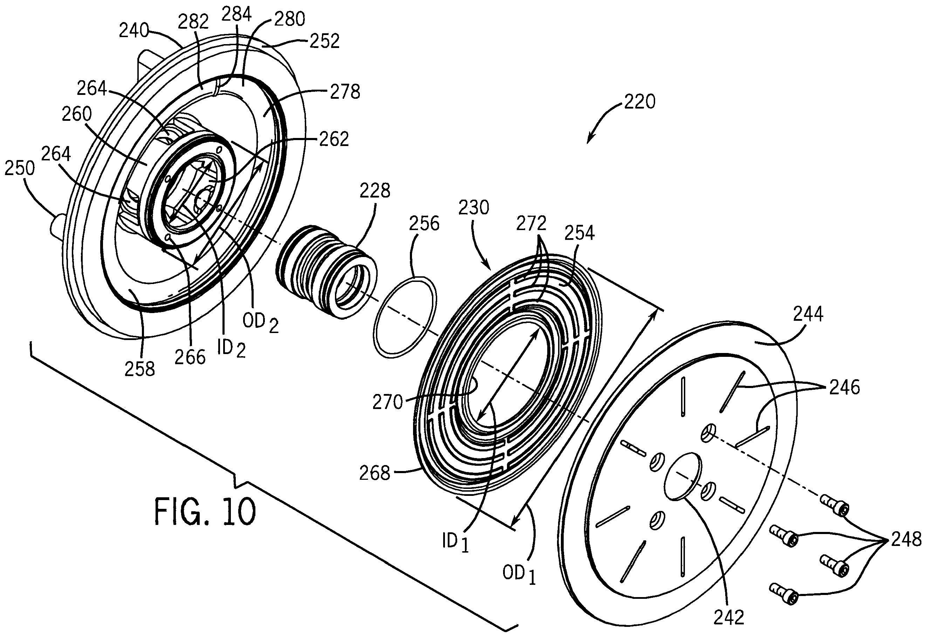

FIG. 10 illustrates the wet seal chamber 220 configured as a drop-in replacement item for the pump 210. Similar to the wet seal chamber 20 described in detail above with respect to FIGS. 2-4, the wet seal chamber 220 can include a resilient member 254 and an O-ring 256. In some embodiments, the resilient member 254 can be a diaphragm. The resilient member 254 can include a first outer diameter OD₁ and a first inner diameter ID₁. The back wall 240 can include a reservoir 258 and a flange 260. The flange 260 can be positioned within the reservoir 258 and can enclose an inner volume 262, which can at least partly receive the seal 228. The flange 260 can include apertures 264, which can enable fluid communication between the reservoir 258 and the inner volume 262. The flange 262 can include a second outer diameter OD₂ and a second inner diameter ID₂. The first inner diameter ID₁ of the resilient member 254 can be in contact with the second outer diameter OD₂ of the flange 260. The first outer diameter OD₁ of the resilient member 254 can be in contact with the back wall 240. The O-ring 256 can be coupled to the second inner diameter ID₂ of the flange 262. In some embodiments, the flange 260 can include holes 266 to receive the fasteners 248 in order to couple the disc 244 to the back wall 240. As previously described, the slots 246 in the disc 244 can enable fluid communication between the pump chamber 226 and a space between the resilient member 254 and the disc 244. In some embodiments, the slots 246 can transfer a pressure from the pump chamber 226 onto the resilient member 254.

As illustrated in FIGS. 8 and 10, the wet seal chamber 220 includes a bladder 278 positioned in the reservoir 258. In some embodiments, the bladder 278 can be ring-shaped and have a proximal end 280 and a distal end 282, with the ends 280, 282 being connected by a connector 284. Although the bladder 278 is shown as being formed in the shape of a ring, the bladder 278 can also be of other shapes and sizes. Additionally, the ends 280, 282 of the bladder 278 can be connected by means other than a connector 284, such as, but not limited to, adhesives. Alternatively, the bladder 278 can be constructed in an integral nature. The bladder 278 encloses a compressible fluid, such as air. However, it is contemplated that other compressible fluids, including, but not limited to, Nitrogen and other inert gases, can be used within the bladder 278. The compressible fluid in the bladder 278 can be at atmospheric pressure in a starting condition of the pump 210. Alternatively, the compressible fluid in the bladder can be at a pressure different than atmospheric pressure in a starting condition of the pump 210, such as slightly above atmospheric pressure. The bladder 278 can be attached to the back wall 240 of the wet seal chamber 220, or can be loosely assembled in the reservoir 258 between the back wall 240 and the resilient member 254.

The resilient member 254 can include a first convolute 268 and a second convolute 270. The first convolute 268 can be positioned adjacent to the first outer diameter OD₁ and the second convolute 270 can be positioned adjacent to the first inner diameter ID₁. The first convolute 268 and/or the second convolute 270 can help the resilient member 254 to flex. If a pressure in the pump chamber 226 is higher than a pressure in the wet seal chamber 220, the first convolute 268 and/or the second convolute 270 can enable the resilient member 254 to bend toward the back wall 240 to decrease the volume of the reservoir 258 and to help direct the first fluid in the wet seal chamber 220 into the inner volume 262 of the flange 260. The resilient member 254 can form or include an impermeable membrane. As a result, the pressure in the vicinity of the seal 228 can be substantially higher than the pressure in the pump chamber 226 in the vicinity of the opening 242.

As previously described with respect to the wet seal chamber 20 illustrated in FIGS. 2-4, the resilient member 254 can include one or more ribs 272. As illustrated in FIG. 10, the ribs 272 can be annular with respect to the resilient member 254, however, the ribs 272 can additionally or alternatively be formed radially with respect to the resilient member 254, or in other suitable configurations. The ribs 272 can be positioned between the first convolute 268 and the second convolute 270. In some embodiments, the ribs 272 can be substantially equally spaced along a perimeter of the resilient member 254. In some embodiments, the ribs 272 can prevent the resilient member 254 from blocking the slots 246, if the pressure in the wet seal chamber 220 is higher, or greater, than in the pump chamber 226. As a result, the ribs 272 can help provide fluid communication of the pump chamber 226 with the space between the resilient member 254 and the disc 244.

Referring back to FIG. 8, if the pump 210 is running, a second fluid can enter the pump chamber 226 through the inlet 222. The second fluid can be propelled toward the outlet 224 by the impeller 216. As described above, the pressure of the second fluid can increase while flowing from the inlet 222 to the outlet 224, and the pressure in the pump chamber 226 can increase in a radial direction away from the shaft 218. The pressure at the outer perimeter of the impeller 216 can also be substantially higher than the pressure in the wet seal chamber 220. The size, design, and location of the slots 246 can be adjusted to change the amount of force on the resilient member 254 based on the realized pressure differential between the fluid pressure in the pump chamber 226 and the pressure of the first fluid in the wet seal chamber 220. Some of the second fluid can flow through the slots 246 and can deform the resilient member 254. The deformation of the resilient member 254 can increase the pressure in the wet seal chamber 220. As a result, the pressure in the vicinity of the shaft 218 and/or the seal 228 can be substantially higher in the wet seal chamber 220 than in the pump chamber 226. In some embodiments, the pressure in the wet seal chamber 220 can be substantially proportional to the pressure in the pump chamber 226.

While the pump 210 is running, the first fluid in the wet seal chamber 220 can heat up and volumetrically expand. As shown in FIG. 10, the bladder 278 in the wet seal chamber 220 can compensate for this volumetric expansion of the first fluid in the wet seal chamber 220 by compressing. Since the bladder 278 can include a compressible fluid, such as air, the bladder 278 can compress to compensate for the difference in volume of the first fluid in the wet seal chamber 220. Such a compression of the bladder 278 can assist in retaining proper pressure on the seal 228 near the shaft 218 and can prevent the deformation of the resilient member 254 away from the back wall 240 due to the increase in volume of the first fluid in the wet seal chamber 220.

When the pump 210 is shut off and the pressure in the pump chamber 226 reduces, the resilient member 254 can decrease the pressure in the wet seal chamber 220 by deforming to increase the volume of the reservoir 254. When the first fluid in the wet seal chamber 220 decreases in temperature, the first fluid in the wet seal chamber 220 may decrease in volume and the bladder 278 can expand to its normal position. Thus, not only can the pressure on the seal 228 in the wet seal chamber 220 be both increased and decreased automatically based on the pressure of the second fluid in the pump chamber 226, but the bladder 278 can also automatically compress and expand based on the properties of the first fluid in the wet seal chamber 220.

In some embodiments, the wet seal chamber 220 can prevent the second fluid from contacting the seal 228 and/or from penetrating into the wet seal chamber 220 through the opening 242. If the second fluid would be harmful to the seal 228 (*e.g*., the second fluid is an aggressive chemical), the wet seal chamber 220 can help increase the lifespan of the seal 228. The wet seal chamber 220 can be at substantially atmospheric pressure, if the pump 210 is not running. In other embodiments, the pressure in the wet seal chamber 220 can be slightly higher than atmospheric pressure if the pump 210 is not running in order to help prevent fluid flow from the pump chamber 226 into the wet seal chamber 220, if the seal 228 fails. Due to the automatic pressurizing and depressurizing of the wet seal chamber 220, the wet seal chamber 220 will not be at a constant over-pressure which is higher than the atmospheric pressure, which can assist in maintenance and can reduce accidents and/or injuries to a technician, if the pump 210 is being serviced and/or repaired.

Additionally, if the pump 210 is running and no fluid is being pumped (dry-run condition), the first fluid in the wet seal chamber 220 can lubricate the shaft 218 and/or the seal 228. As a result, the wet seal chamber 220 can increase the runtime of the pump 210 during dry-run conditions before the pump 210 fails due to overheating or other mechanical failures.

Although the bladder 278 in the pump 210 is illustrated in FIGS. 8-10 as being used with the resilient member 254 that is a diaphragm, the bladder 278 can also be used with a wet seal chamber that employs the resilient member 124 of FIGS. 5 and 6 that can include a ring 126 and a bladder 128.

It will be appreciated by those skilled in the art that while the invention has been described above in connection with particular embodiments and examples, the invention is not necessarily so limited, and that numerous other embodiments, examples, uses, modifications and departures from the embodiments, examples and uses are intended to be encompassed by the claims attached hereto. Various features and advantages of the invention are set forth in the following claims.

## Claims

1. A pump (10, 210) comprising:
a pump chamber (14, 214) including an inlet (22, 222) and an outlet (24, 224);
a shaft (18, 218) at least partially positioned in the pump chamber;
an impeller (16, 216) coupled to the shaft;
a seal (28, 228) coupled to the shaft;
a wet seal chamber (20, 220) including a first fluid;
the wet seal chamber including a separator (30, 230), the separator including a disc (44, 244) and a resilient member (54, 254), the disc including at least one slot (46, 246) through which fluid pressure from the pump chamber is transferred to the resilient member, and wherein the resilient member decreases a volume of the wet seal chamber in order to increase a pressure in the wet seal chamber;
the wet seal chamber substantially preventing fluid in the pump chamber from contacting the seal in order to prolong a life of the seal;
the pump being **characterised in that** it comprises a bladder (128, 278) positioned within the wet seal chamber, wherein the bladder includes a compressible fluid.

2. The pump of claim 1, wherein the bladder compresses when the first fluid volumetrically expands in the wet seal chamber and, optionally or preferably, wherein the compressible fluid is air and/or wherein the compressible fluid is at atmospheric pressure in a starting condition of the pump.

3. The pump of claim 1 or 2, wherein the resilient member is a diaphragm and/or wherein the resilient member includes a second bladder enclosing a second fluid.

4. The pump (10, 210) of claim 1, further comprising a pump housing (12, 14; 212, 214); and wherein
the impeller resides in the pump chamber; and
the wet seal chamber (20, 220) defines a reservoir for holding the first fluid having a first fluid pressure, and wherein the separator (30, 230) is for separating the first fluid of the wet seal chamber from a second fluid of the pump chamber, the second fluid having a second fluid pressure and the second fluid pressure from the pump chamber being transferred through the at least one slot (46, 246) of the disc (44, 244) to the resilient member, the resilient member adjusting to increase the first fluid pressure by reducing a volume of the reservoir upon the second fluid pressure in the pumping chamber being greater than the first fluid pressure in the reservoir; and
the bladder (128, 278) encloses a third fluid, wherein the third fluid is compressible such that the bladder compresses when the first fluid volumetrically expands.

5. The pump of claim 4, wherein the third fluid is air and/or wherein the first fluid pressure is greater than the second fluid pressure.

6. The pump of claim 4 or 5, wherein the bladder is attached to a back wall (240) of the wet seal chamber, and/or wherein the bladder (278) is ring-shaped with a proximal end (280) and a distal end (282), the proximal end connected to the distal end and, optionally or preferably, wherein the proximal end is connected to the distal end by a connector (284).

7. The pump of claim 6, wherein the resilient member includes a diaphragm and/or wherein the resilient member includes a ring and a second bladder (128), the second bladder enclosing a fourth fluid.

8. The pump (10, 210) of claim 1, wherein the wet seal chamber further comprises:
a back wall (40, 240), wherein the separator and the back wall define a reservoir for enclosing the first fluid having a first fluid pressure, the separator positioned between the pump chamber having a second fluid having a second fluid pressure and the reservoir; and
wherein the bladder (128, 278) is positioned in the reservoir, the bladder enclosing a third fluid, the third fluid being compressible such that the bladder compensates for volumetric expansion of the first fluid; and
wherein the resilient member deforms when the second fluid pressure of the second fluid in the pumping chamber is greater than the first fluid pressure of the first fluid in the reservoir, the second fluid pressure from the pump chamber being transferred to the resilient member through the at least one slot (46, 246) of the disc (44, 244).

9. The pump of claim 8, wherein the bladder is ring-shaped.

10. The pump of claim 8 or 9, wherein the third fluid is air.

11. The pump of claim 8, 9 or 10, wherein the resilient member includes a diaphragm and/or wherein the resilient member includes a second bladder (128) enclosing a fourth fluid.

## Patentansprüche

1. Pumpe (10, 210), die Folgendes umfasst:
eine Pumpenkammer (14, 214), umfassend einen Einlass (22, 222) und einen Auslass (24, 224);
eine Welle (18, 218), zumindest teilweise in der Pumpenkammer positioniert;
ein Pumpenrad (16, 216), das mit der Welle gekoppelt ist;
eine Nassdichtungskammer (20, 220), umfassend ein erstes Fluid mit einem ersten Fluiddruck; eine Dichtung (28, 228), die mit der Welle gekoppelt ist; und ein Trennelement (30, 230);
wobei die Nassdichtungskammer im Wesentlichen verhindert, dass ein zweites Fluid mit einem zweiten Fluiddruck in der Pumpenkammer in Kontakt mit der Dichtung kommt, um so die Lebensdauer der Dichtung zu verlängern; und
wobei das Trennelement eine Scheibe (44, 244) und ein elastisches Element (54, 254) umfasst, wobei die Scheibe zumindest einen Schlitz (46, 246) umfasst, durch den der zweite Fluiddruck von der Pumpenkammer auf das elastische Element übertragen wird, und wobei das elastische Element ein Volumen der Nassdichtungskammer verringert, um den ersten Fluiddruck des ersten Fluids in der Nassdichtungskammer zu erhöhen; und
wobei die Pumpe **dadurch gekennzeichnet ist, dass** sie ferner eine Blase (128, 278) umfasst, die innerhalb der Nassdichtungskammer positioniert ist, wobei die Blase ein komprimierbares drittes Fluid umfasst.

2. Pumpe nach Anspruch 1, wobei die Blase komprimiert wird, wenn sich das erste Fluid in der Nassdichtungskammer volumetrisch ausdehnt, und wobei, optional oder vorzugsweise, das komprimierbare dritte Fluid Luft ist und/oder das komprimierbare dritte Fluid in einer Startbedingung der Pumpe bei atmosphärischem Druck ist.

3. Pumpe nach Anspruch 1 oder 2, wobei das elastische Element eine Membran ist und/oder wobei das elastische Element eine zweite Blase, ein viertes Fluid umschließend, umfasst.

4. Pumpe (10, 210) nach Anspruch 1, ferner umfassend ein Pumpengehäuse (12, 14; 212, 214); und wobei:
das Pumpenrad sich in der Pumpenkammer befindet;
die Nassdichtungskammer (20, 220) einen Behälter zum Halten des ersten Fluids definiert, und wobei das Trennelement (30, 230) zum Trennen des ersten Fluids der Nassdichtungskammer vom zweiten Fluid der Pumpenkammer dient, wobei der zweite Fluiddruck von der Pumpenkammer durch zumindest einen Schlitz (46, 246) der Scheibe (44, 244) zum elastischen Element übertragen wird, wobei das elastische Element eingestellt wird, um den ersten Fluiddruck zu erhöhen durch Verringern eines Volumens des Behälters, wenn der zweite Fluiddruck in der Pumpenkammer größer als der erste Fluiddruck im Behälter ist; und
die Blase komprimiert wird, wenn sich das erste Fluid volumetrisch ausdehnt.

5. Pumpe nach Anspruch 4, wobei das komprimierbare dritte Fluid Luft ist und/oder wobei der erste Fluiddruck größer als der zweite Fluiddruck ist.

6. Pumpe nach Anspruch 4 oder 5, wobei die Blase an einer Rückwand (240) der Nassdichtungskammer befestigt ist und/oder wobei die Blase (278) ringförmig mit einem proximalen Ende (280) und einem distalen Ende (282) ist, wobei das proximale Ende mit dem distalen Ende verbunden ist und wobei, optional oder vorzugsweise, das proximale Ende über einen Verbinder (284) mit dem distalen Ende verbunden ist.

7. Pumpe nach Anspruch 6, wobei das elastische Element eine Membran umfasst und/oder wobei das elastische Element einen Ring und eine zweite Blase (128) umfasst, wobei die zweite Blase ein viertes Fluid umschließt.

8. Pumpe (10, 210) nach Anspruch 1, wobei die Nassdichtungskammer ferner Folgendes umfasst:
eine Rückwand (40, 240), wobei das Trennelement und die Rückwand einen Behälter zum Umschließen des ersten Fluids definieren, wobei das Trennelement zwischen der Pumpenkammer und dem Behälter positioniert ist; und
wobei die Blase (128, 278) im Behälter positioniert ist, wobei die Blase das komprimierbare dritte Fluid umschließt, sodass die Blase die volumetrische Ausdehnung des ersten Fluids kompensiert; und
wobei sich das elastische Element verformt, wenn der zweite Fluiddruck des zweiten Fluids in der Pumpenkammer größer als der erste Fluiddruck des ersten Fluids im Behälter ist, wobei der zweite Fluiddruck von der Pumpenkammer durch den zumindest einen Schlitz (46, 246) der Scheibe (44, 244) auf das elastische Element übertragen wird.

9. Pumpe nach Anspruch 8, wobei die Blase ringförmig ist.

10. Pumpe nach Anspruch 8 oder 9, wobei das komprimierbare dritte Fluid Luft ist.

11. Pumpe nach Anspruch 8, 9 oder 10, wobei das elastische Element eine Membran umfasst und/oder wobei das elastische Element eine zweite Blase (128), ein viertes Fluid umschließend, umfasst.

## Revendications

1. Pompe (10, 210) comprenant:
une chambre de pompe (14, 214) comprenant une entrée (22, 222) et une sortie (24, 224) ;
un arbre (18, 218) au moins partiellement positionné dans la chambre de pompe;
un rotor (16, 216) couplé à l'arbre;
une chambre étanche à l'humidité (20, 220) comprenant un premier fluide ayant une première pression de fluide; un joint (28, 228) couplé à l'arbre; et un séparateur (30, 230);
dans laquelle la chambre étanche à l'humidité empêche sensiblement un deuxième fluide ayant une seconde pression de fluide dans la chambre de pompe d'entrer en contact avec le joint afin de prolonger une vie utile du joint; et
dans laquelle le séparateur comprend un disque (44, 244) et un élément élastique (54, 254), le disque comprenant au moins une fente (46, 246) à travers laquelle la seconde pression de fluide de la chambre de pompe est transférée à l'élément élastique, et dans laquelle l'élément élastique diminue un volume de la chambre étanche à l'humidité afin d'augmenter la première pression de fluide du premier fluide dans la chambre étanche à l'humidité; et
la pompe étant **caractérisée en ce qu'**elle comprend en outre une vessie (128, 278) positionnée dans la chambre étanche à l'humidité, la vessie comprenant un troisième fluide compressible.

2. Pompe selon la revendication 1, dans laquelle la vessie se comprime lorsque le premier fluide se dilate volumétriquement dans la chambre étanche à l'humidité et, éventuellement ou de préférence, dans laquelle le troisième fluide compressible est de l'air et/ou dans laquelle le troisième fluide compressible est à pression atmosphérique dans un état initial de la pompe.

3. Pompe selon la revendication 1 ou 2, dans laquelle l'élément élastique est un diaphragme et/ou dans laquelle l'élément élastique comprend une seconde vessie renfermant un quatrième fluide.

4. Pompe (10, 210) selon la revendication 1, comprenant en outre un carter de pompe (12, 14; 212, 214); et dans laquelle:
le rotor réside dans la chambre de pompe;
la chambre étanche à l'humidité (20, 220) définit un réservoir pour contenir le premier fluide, et le séparateur (30, 230) étant destiné à séparer le premier fluide de la chambre étanche à l'humidité du deuxième fluide de la chambre de pompe, la seconde pression de fluide de la chambre de pompe étant transférée à travers l'au moins une fente (46, 246) du disque (44, 244) à l'élément élastique, l'élément élastique s'ajustant pour augmenter la première pression de fluide en réduisant un volume du réservoir lorsque la seconde pression de fluide dans la chambre de pompe étant supérieure à la première pression de fluide dans le réservoir, et
la vessie se comprime lorsque le premier fluide se dilate volumétriquement.

5. Pompe selon la revendication 4, dans laquelle le troisième fluide compressible est de l'air et/ou dans laquelle la première pression de fluide est supérieure à la seconde pression de fluide.

6. Pompe selon la revendication 4 ou 5, dans laquelle la vessie est fixée à une paroi arrière (240) de la chambre étanche à l'humidité et/ou dans laquelle la vessie (278) a une forme annulaire avec une extrémité proximale (280) et une extrémité distale (282), l'extrémité proximale étant reliée à l'extrémité distale et, au choix ou de préférence, l'extrémité proximale étant reliée à l'extrémité distale par un connecteur (284).

7. Pompe selon la revendication 6, dans laquelle l'élément élastique comprend un diaphragme et/ou dans laquelle l'élément élastique comprend un anneau et une seconde vessie (128), la seconde vessie renfermant un quatrième fluide.

8. Pompe (10, 210) selon la revendication 1, **caractérisée en ce que** la chambre étanche à l'humidité comprend en outre:
une paroi arrière (40, 240), dans laquelle le séparateur et la paroi arrière définissent un réservoir pour contenir le premier fluide, le séparateur étant placé entre la chambre de pompe et le réservoir; et
dans laquelle la vessie (128, 278) est positionnée dans le réservoir, la vessie renfermant le troisième fluide compressible de sorte que la vessie compense l'expansion volumétrique du premier fluide; et
dans laquelle l'élément élastique se déforme lorsque la seconde pression de fluide du deuxième fluide dans la chambre de pompe est supérieure à la première pression de fluide du premier fluide dans le réservoir, la seconde pression de fluide de la chambre de pompe étant transférée à l'élément élastique à travers l'au moins une fente (46, 246) du disque (44, 244).

9. Pompe selon la revendication 8, dans laquelle la vessie est en forme annulaire.

10. Pompe selon la revendication 8 ou 9, dans laquelle le troisième fluide compressible est de l'air.

11. Pompe selon la revendication 8, 9 ou 10, dans laquelle l'élément élastique comprend un diaphragme et/ou dans laquelle l'élément élastique comprend une seconde vessie (128) renfermant un quatrième fluide.
